# EUROPEAN PATENT SPECIFICATION

(11) **EP 3 006 836 B1**
(45) Date of publication and mention of the grant of the patent: **01.05.2019**
(21) Application number: 14808369.4
(22) Date of filing: 03.06.2014
(51) Int. Cl.: F24D 19/00, B23K 31/02, F28F 3/02, F28F 3/14, F28F 9/26, B23K 101/14, F28D 21/00

(54) **METHOD FOR MANUFACTURING PANEL RADIATOR, BACKUP MEMBER, AND PANEL RADIATOR**
VERFAHREN ZUR HERSTELLUNG EINES PLATTENHEIZKÖRPERS, SICHERUNGSELEMENT UND PLATTENHEIZKÖRPER
PANNEAU-RADIATEUR AINSI QUE PROCÉDÉ DE FABRICATION DE CELUI-CI, ET ÉLÉMENT DE SUPPORT

(30) Priority: 03.06.2013 JP 2013117297
(43) Date of publication of application: 13.04.2016
(73) Proprietor: Daikin Industries, Ltd., Osaka-shi, Osaka 530-8323 (JP)
(72) Inventor: HARADA, Shinsuke, Osaka 530-8323 (JP); FUJINO, Hirokazu, Osaka 530-8323 (JP)
(74) Representative: Hoffmann Eitle
(86) International application number: PCT/JP2014/064787
(87) International publication number: WO 2014/196548

(56) References cited:
- DE-A1- 2 423 633
- DE-A1- 2 506 778
- DE-A1- 3 102 188
- DE-A1- 3 113 208
- DE-A1- 19 948 776
- DE-U1-202009 007 148
- GB-A- 1 451 869

## Description

### Technical Field

The present invention relates to a method for manufacturing a panel radiator for use as a heater in which liquid such as hot water circulates, a backup member for use in a panel radiator, and a panel radiator including the backup member.

### Background Art

Conventionally, there are known panel radiators in which liquid such as hot water circulates. The panel radiators are used as heating devices. Generally, a panel radiator includes a first header including an inlet for liquid, a second header including an outlet for liquid, and a plurality of paths extending from the first header to the second header.

Patent Literature 1 discloses a panel radiator including a backup member as a spacer. The backup member is inserted into the space between panels of the panel radiator and placed at a position corresponding to an inlet for liquid and a joint is connected. The backup member includes an axial hole, a side opening extending radially from the axial hole, and at least two radial holes. The side opening faces in a direction in which heat transfer fluid is guided toward the central portion of the inside of the panels. The two radial holes face toward the edges of the panels. Patent Literature 1 recites that the radiator including the two radial holes has a greater efficiency than the conventional radiators.
Patent Literature 2 discloses a rectangular side opening which is formed in a circular back up member of a panel radiator.

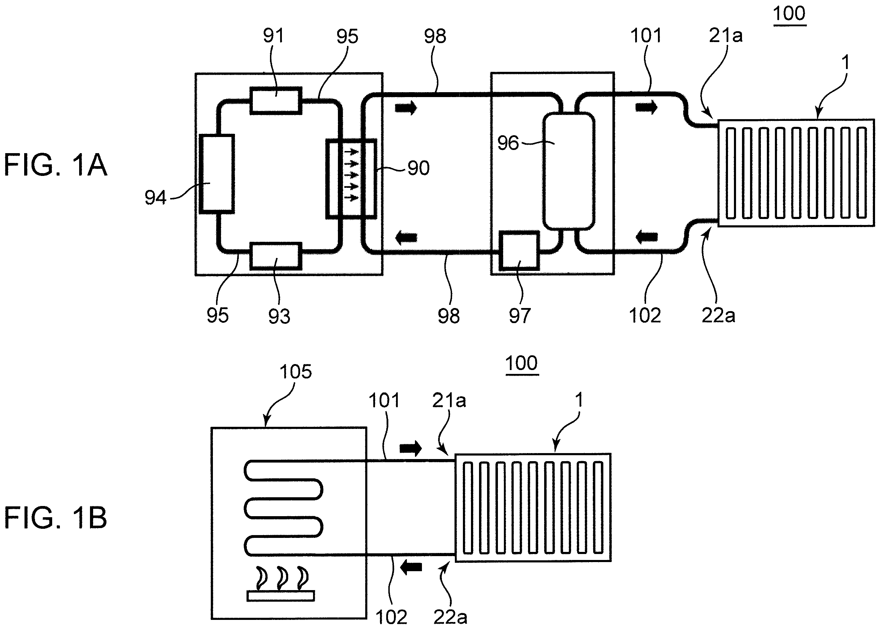

However, Patent Literature 1 has no disclosure relating to the way of accurately adjusting the orientation of the backup member shown in FIG. 1 so that the side opening and the radial holes face in desired directions. For example, it is troublesome and inefficient to manually place the backup member in an accurate desired orientation. The same holds true for the backup member of Patent Literature 2.

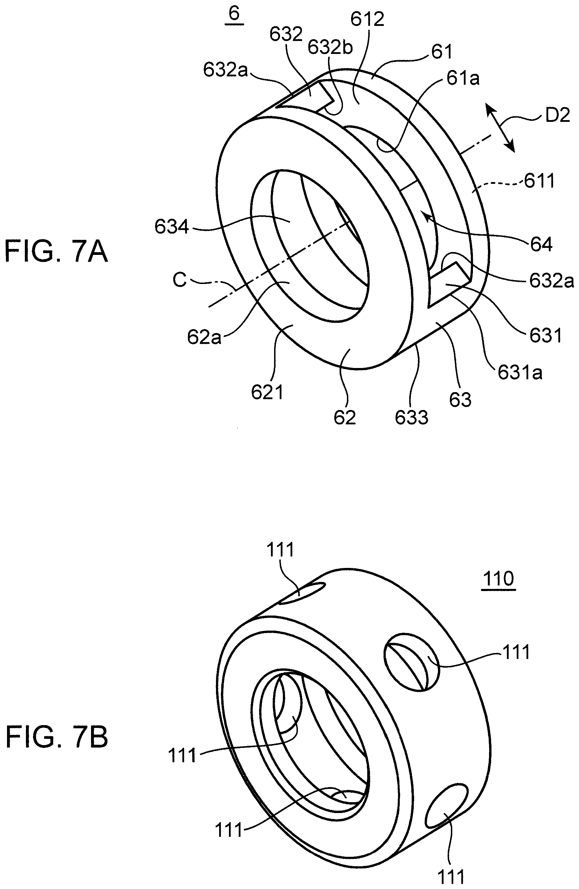

Accordingly, it is considered to use a backup member 110 including a plurality of holes (for example, five holes) 111 at a regular interval in a circumferential direction as shown in the reference example of FIG. 7B, for example. This makes it possible to hold the variation in the facing direction of the hole 111 within a predetermined range regardless of the orientation of the backup member 110. However, even if such backup member 110 is used, a variation will unavoidably be caused within the predetermined range.

### Citation List

### Patent Literature

Patent Literature 1: Paragraphs [0055]-[0057] in the specification and FIG. 1 of European Unexamined Patent Publication No. 1681530
Patent Literature 2: German Utility Model DE 20 2009 007148 U1

### Summary of Invention

The present invention aims to place a backup member in a desired orientation efficiently in a method for manufacturing a panel radiator in which a backup member is disposed at a position corresponding to an inlet for liquid provided in a panel member.

The present invention is directed to a method for manufacturing a panel radiator in which a backup member including an inflow opening for liquid and a side opening communicating with the inflow opening is disposed at a position corresponding to an inlet for liquid provided in a panel member. The manufacturing method comprises steps of: inserting a guide portion extending toward a predetermined position into the side opening of the backup member; placing the backup member at the predetermined position with the side opening facing in a predetermined direction by moving the backup member to the predetermined position along the guide portion while the guide portion is inserted in the side opening; and securing the backup member disposed at the predetermined position to the panel member at a position corresponding to the inlet ofthe panel member.

### Brief Description of Drawings

FIG. 1A is a schematic configuration diagram showing an exemplary heating system including a panel radiator according to an embodiment of the present invention. FIG. 1B is a schematic configuration diagram showing another exemplary heating system including the panel radiator according to the embodiment.
FIG. 2 is a perspective view ofthe panel radiator according to the embodiment.
FIG. 3 is an enlarged perspective view of a part of the panel radiator according to the embodiment.
FIG. 4 is an enlarged front view of a part of the panel radiator according to the embodiment.
FIG. 5 is an enlarged sectional view of a part of the panel radiator according to the embodiment.
FIG. 6 is a schematic view illustrating a flow of liquid (hot water) in the panel radiator according to the embodiment.
FIG. 7A is a perspective view of a backup member according to the embodiment of the present invention. FIG. 7B is a perspective view of a backup member according to a reference example.
FIG. 8A is a front view of the backup member according to the embodiment. FIG. 8B is a sectional view of the backup member according to the embodiment. FIG. 8C is a side view of the backup member according to the embodiment.
FIG. 9A is a plan view of a guide member serving as a jig for use in a method for manufacturing the panel radiator according to the embodiment of the present invention and the backup member disposed on the guide member. FIG. 9B is a front view of the guide member and the backup member. FIG. 9C is a perspective view of the guide member and the backup member.
FIG. 10 is a plan view illustrating the method for manufacturing the panel radiator according to the embodiment.
FIG. 11 is a plan view illustrating the method for manufacturing the panel radiator according to the embodiment.
FIG. 12 is a sectional view illustrating the method for manufacturing the panel radiator according to the embodiment.
FIG. 13 is a perspective view of a modified backup member according to the embodiment.
FIG. 14A is a sectional view of the modified backup member shown in FIG. 13. FIG. 14B is a side view ofthe modified backup member shown in FIG. 13.

### Description of Embodiments

Hereinafter, a method for manufacturing a panel radiator, a backup member, and a panel radiator according to an embodiment of the present invention will be described with reference to the accompanying drawings.

### [Heating System]

First, a hot water heating system including a panel radiator 1 according to an embodiment of the present invention will be described. The hot water heating system of this embodiment includes a hot water supplier which obtains hot water by heating water, and the panel radiator 1 which is supplied with hot water from the hot water supplier. A heat pump-type hot water supplier or a combustion-type hot water supplier can be used as the hot water supplier.

FIG. 1A is a schematic configuration diagram showing an exemplary heating system 100 including the panel radiator 1. As shown in FIG. 1A, the heating system 100 is a hot water heating system of a heat pump type utilizing a vapor compression refrigeration cycle.

The heating system 100 includes a refrigerant circuit and a hot water storage circuit. The refrigerant circuit includes a compressor 91, a heat exchanger (water heat exchanger) 90, an electric expansion valve 93 as an expansion mechanism, a heat exchanger (air heat exchanger) 94, and refrigerant pipes 95 connecting these components. The hot water storage circuit includes a tank 96, a pump 97, the water heat exchanger 90, and water pipes 98 connecting these components. The water heat exchanger 90 includes two flow lines one of which is included in the refrigerant circuit and the other of which is included in the hot water storage circuit. Water in the tank 96 is caused to flow out from a lower portion of the tank 96 to the water heat exchanger 90 by operation of the pump 97. A refrigerant circulating in the refrigerant circuit transfers heat to water circulating in the hot water storage circuit in the water heat exchanger 90 by way of heat exchange and absorbs heat from the outside air in the air heat exchanger 94 by way of heat exchange. The water (hot water) heated in the water heat exchanger 90 is returned to an upper portion of the tank 96. The tank 96 is connected with a supply pipe 101 and a discharge pipe 102. The supply pipe 101 is connected to the upper portion of the tank 96, for example. The discharge pipe 102 is connected to the bottom ofthe tank 96, for example.

The supply pipe 101 is used for supplying hot water stored in the tank 96 to the panel radiator 1. The supply pipe 101 is connected to an inlet 21a of the panel radiator 1. The discharge pipe 102 is used for discharging hot water that has passed through the panel radiator 1. The discharge pipe 102 is connected to an outlet 22a of the panel radiator 1. The hot water discharged from the outlet 22a of the panel radiator 1 is returned to the tank 96 through the discharge pipe 102. The tank 96 is connected with a water supply pipe for supplying water into the tank 96 from an unillustrated water supply source. Tap water can be used as the water supply source, for example.

FIG. 1B is a schematic configuration diagram showing another exemplary heating system 100 including the panel radiator 1. As shown in FIG. 1B, the heating system 100 is a hot water heating system 100 of a combustion type, and includes a combustion-type hot water supplier 105 and the panel radiator 1. The combustion-type hot water supplier transfers heat obtained by burning fuel such as gas to water.

The hot water heated in the combustion-type hot water supplier 105 is supplied to the panel radiator through a supply pipe 101. The supply pipe 101 is connected to an inlet 21a of the panel radiator 1. A discharge pipe 102 is used for discharging hot water that has passed through the panel radiator 1. The discharge pipe 102 is connected to an outlet 22a of the panel radiator 1. The hot water discharged from the outlet 22a of the panel radiator 1 is returned to the hot water supplier 105 through the discharge pipe 102 and heated again.

### [Panel Radiator]

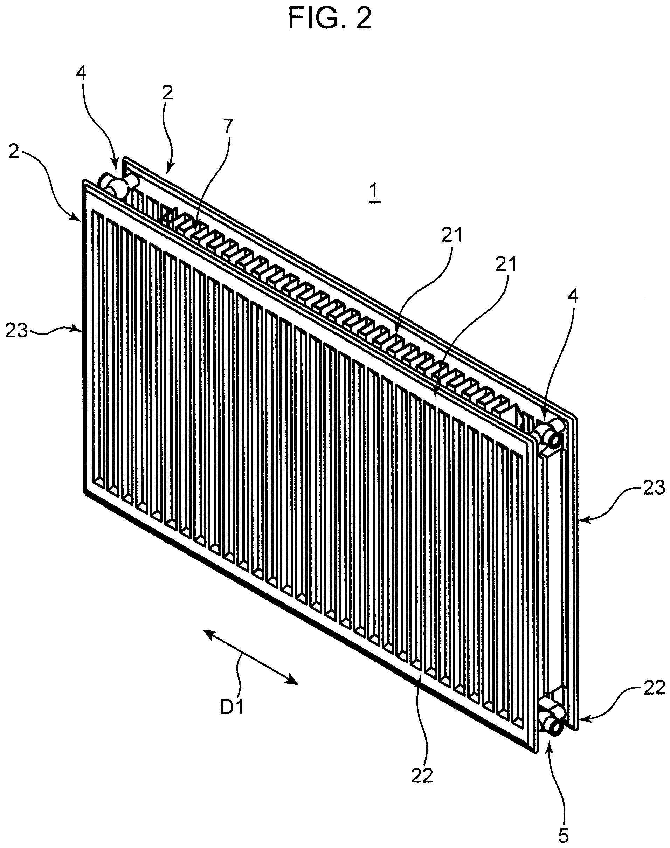

Now, the panel radiator 1 according to the present embodiment will be described. FIG. 2 is a perspective view of the panel radiator 1 according to the present embodiment. The panel radiator 1 is a radiator in which hot water supplied through the supply pipe 101 circulates for heating a room.

As shown in FIG. 2, the panel radiator 1 includes one or more panels 2, a fin 7, and a plurality of joints. The panel radiator 1 of this embodiment includes two panels 2, 2. However, the number of panels 2 is not limited to two.

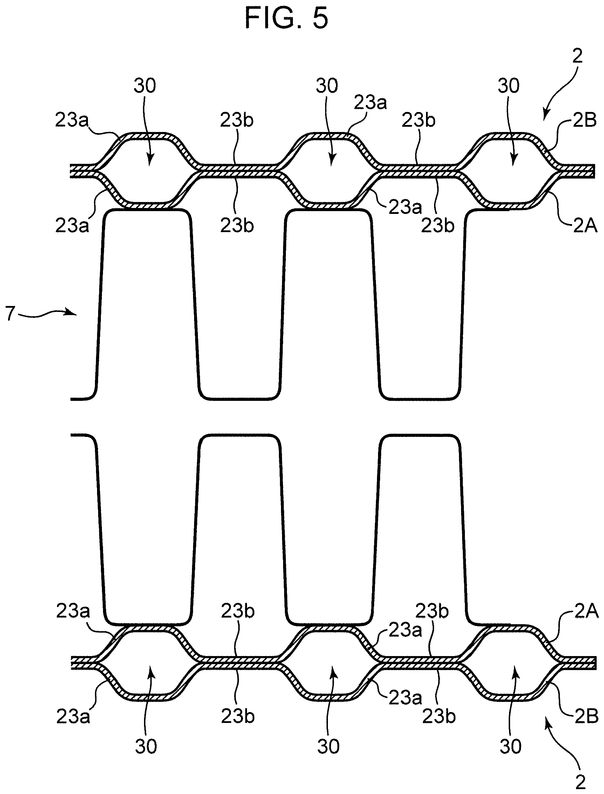

Each of the panels 2 has a flat shape with a small thickness and is rectangular in front view. Each of the panels 2 includes two panel members 2A and 2B (see FIG. 5) stacked and joined together in their thickness direction. The two panels 2, 2 are spaced from each other in the thickness direction, and the fin 7 and the plurality ofjoints are disposed between the two panels 2.

The fin 7 is in contact with each panel 2. As shown in the sectional view of FIG. 5, the fin 7 has a wavy shape in order to increase the heat exchange efficiency.

The plurality ofjoints include at least one first joint 4 and at least one second joint 5. In this embodiment, the first joint 4 functions as an inlet joint for allowing hot water to flow into the panels 2, and the second joint 5 functions as an outlet joint for allowing the hot water having passed through the panels 2 to flow out of the panels 2. However, the invention is not limited to this configuration. It may be configured such that the first joint 4 functions as an outlet joint and the second joint 5 functions as an inlet joint. The inlet joint is connected with the supply pipe 101 and the outlet joint is connected with the discharge pipe 102.

Further, in this embodiment, the plurality ofjoints include the two first joints 4, 4 and the two second joints 5, 5 as shown in FIG. 2. One of the two first joints 4, 4 is connected to one upper end of each panel 2 in a horizontal direction and the other of the first joints 4, 4 is connected to the other upper end of each panel 2 in the horizontal direction. One of the two second joints 5, 5 is connected to one lower end of each panel 2 in the horizontal direction and the other of the second joints 5, 5 is connected to the other lower end of each panel 2 in the horizontal direction. Therefore, in this embodiment, it is possible to use one or the other of the two first joints 4, 4 as an inlet joint and use one or the other of the two second joints 5, 5 as an outlet joint. The remaining joints are each closed by an unillustrated plug.

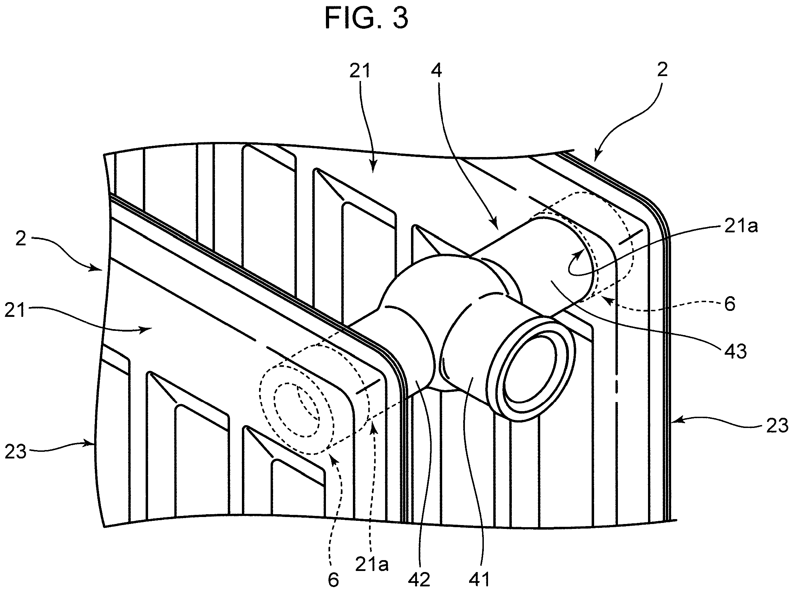

In this embodiment, because the panel radiator 1 includes the two panels 2, 2, each of the joints is T-shaped. For example, the joint 4 includes three connecting pipes 41, 42, and 43 as shown in FIG. 3. These connecting pipes 41, 42, and 43 are connected to one another via a central joint portion and extend from the joint portion in different directions. The connecting pipe 42 is connected to the inlet 21a of one of the panels 2, and the connecting pipe 43 is connected to the inlet 21a of the other of the panels 2. The connecting pipe 41 is connected to the supply pipe 101. The structure ofthe joint 5 is similar to that of the joint 4 and therefore the description thereof will be omitted.

Now the structures ofthe panels 2, 2 will be described. Because these two panels 2, 2 have substantially the same configuration, only one of the panels 2 will be described hereinafter. As shown in FIGS. 2 to 6, the panel 2 includes a first header 21, a second header 22, a flow dividing portion 23, and a backup member (backup ring) 6. The flow dividing portion 23 includes a plurality ofpaths 30 each extending from the first header 21 to the second header 22.

The first header 21 is used for supplying hot water having introduced through the joint 4 to the plurality of paths 30 of the flow dividing portion 23. The second header 22 serves to cause streams of water having passed through the plurality of paths 30 of the flow dividing portion 23 to join and flow out ofthe panel 2 through the outlet 22a.

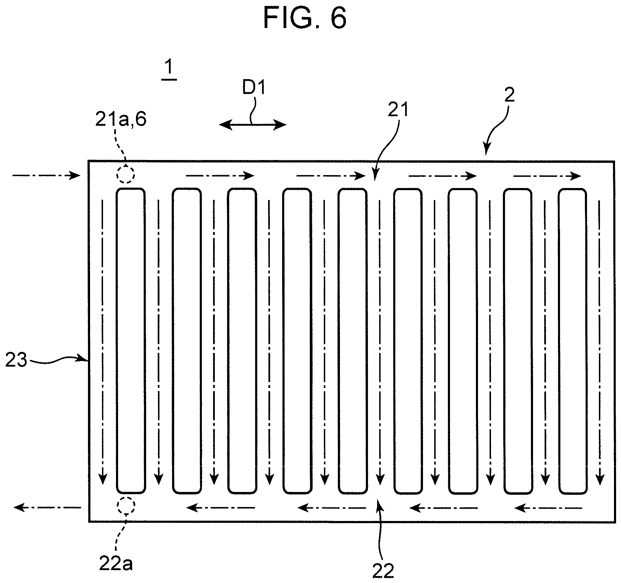

As shown in FIGS. 2 and 6, the first header 21 extends in a specific direction D1. The second header 22 extends in the direction D1 at a position spaced from the first header 21. The plurality of paths 30 are aligned in the direction D1. In this embodiment, the direction D1 is horizontal, but is not limited to the horizontal direction. In this embodiment, the plurality of paths 30 extend vertically in parallel with each other.

The first header 21 includes the inlet 21a for hot water. In this embodiment, the inlet 21a is formed at one end of the first header 21 in the direction Dl, but is not limited to this position. The second header 2 includes the outlet 22a for hot water. The outlet 22a is formed at one end of the second header 22 in the direction D1 that lies on the same side as the inlet 21a, but is not limited to this position.

In this embodiment, the first header 21, the second header 22, and the flow dividing portion 23 are formed by stacking and joining the pair of panel members 2A and 2B as shown in FIG. 5. Each of the panel members can be obtained by press molding of a sheet metal, for example. The panel 2 may be made by joining the first header 21, the second header 22, and the flow distributing portion 23 together after separately molding them.

As shown in FIG. 5, each of the panel members 2A and 2B is formed with projecting parts 23a and recessed parts 23b alternately in the flow dividing portions 23. The panel members 2A and 2B are so disposed that the projecting parts 23a of the panel member 2A face the projecting parts 23a of the panel member 2B, and the recessed parts 23b ofthe panel member 2A face the recessed parts 23b of the panel member 2B. Consequently, the plurality of paths 30 are defined in the flow dividing portion 23. The recessed parts 23b in each pair are joined to each other by welding, for example.

### [Backup member]

The backup member 6 is provided in the first header 21 for allowing liquid having introduced through the inlet 21a to flow to the inside of the first header 21. Further, it is possible to prevent unbalanced flow distribution to the plurality of paths 30 by adjusting the orientation of a side opening 64, for example. The backup member 6 also functions to support the panel members 2A and 2B to prevent the panel members 2A and 2B from being deformed by pressure applied thereto during manufacture ofthe panel 2.

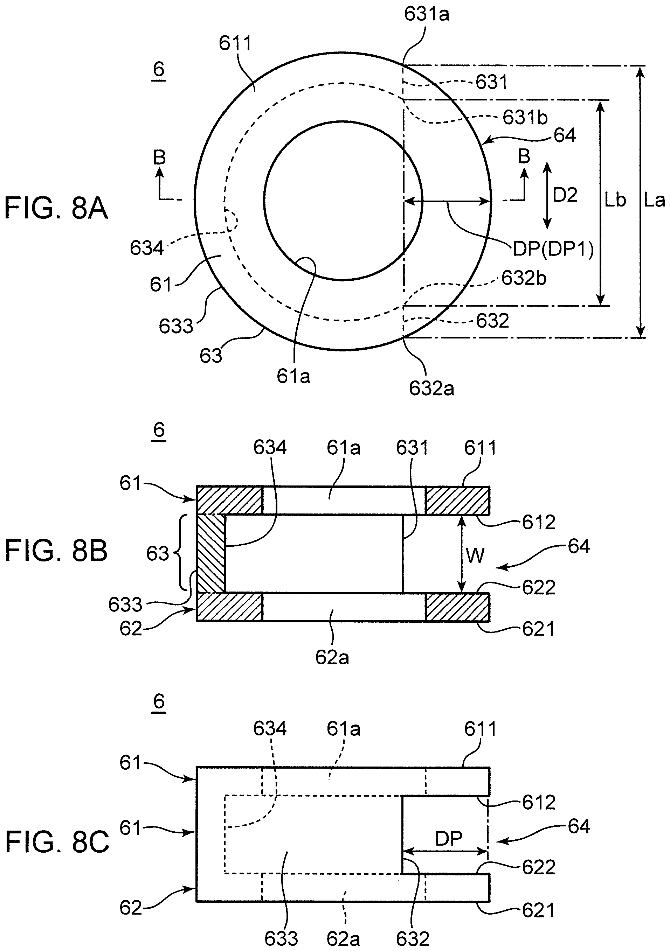

FIG. 7A is a perspective view ofthe backup member 6 according to the embodiment of the present invention. FIG. 8A is a front view of the backup member 6. FIG. 8B is a sectional view (sectional view taken along the line B-B in FIG. 8A) of the backup member 6. FIG. 8C is a side view of the backup member 6. As shown in FIGS. 7A, 8A, 8B, and 8C, the backup member 6 is in the form of a cylinder. Specifically, the backup member 6 of this embodiment is in the form of a ring. The backup member (backup ring) 6 includes a first disc portion 61, a second disc portion 62, and a side wall portion 63.

The first disc portion 61 is in the form of a ring. The first disc portion 61 includes an inflow opening 61a for introducing hot water through the inlet 21a of the first header 21a. The inflow opening 61a is a hole passing through the first disc portion 61 in their thickness direction (axial direction) ofthe first disc portion 61.

The second disc portion 62 is in the form of a ring. The second disc portion 62 includes an inflow opening 62a. The second disc portion 62 is concentric with the first disc portion 61. The center of the first disc portion 61 and the center of the second disc portion 62 lie on a central axis C of the backup member 6 shown in FIG. 7A. In this embodiment, because the second disc portion 62 is disposed on the opposite side of the inlet 21a of the first header 21, the inflow opening 62a of the second disc portion 62 does not function to introduce hot water. Therefore, the inflow opening 62a of the second disc portion 62 may be omitted in this embodiment.

The side wall portion 63 constitutes a part of the lateral portion of the backup member 6 and extends in a circumferential direction between the first disc portion 61 and the second disc portion 62. The side wall portion 63 includes one end surface (one end surface) 631 at circumferentially one end and another end surface (second end surface) at circumferentially the opposite end. In a sectional view obtained by cutting the backup member 6 along a plane perpendicularly intersecting the central axis C, the side wall portion is in the shape of an arc extending in the circumferential direction of the backup member 6. The arc of the side wall portion 63 is a major arc extending more than half of the entire circumference. In this embodiment, the first disc portion 61, the second disc portion 62, and the side wall portion 63 have equal outer diameters, but the invention is not limited to this configuration.

The first disc portion 61, the second disc portion 62, and the side wall portion 63 can be made by separately molding each component by sheet-metal working and then joining them together. However, the making method is not limited to this. For example, the backup member 6 can be made by roll forming a metal flat plate into a ring, and cutting the obtained ring to form the side opening 64.

The side opening 64 is defined by the circumferential portion ofthe backup member 6 that bears no side wall portion 63. The side opening 64 opens radially of the backup member 6. The side opening 64 passes through the circumferential portion of the backup member 64 in a radial direction. The side opening 64 is defined by a part of an inner surface 612 of the first disc portion 61, a part of an inner surface 622 of the second disc portion 62, the one end surface 631 of the side wall portion 63, and the another end surface 632 of the side wall portion 63. The side opening 64 communicates with the inflow opening 61a and the inflow opening 62a. The side opening 64 is in the form of a groove (slit).

In this embodiment, no opening other than the side opening 64 is formed in the circumferential portion of the backup member 6. However, the invention is not limited to this configuration. One or more openings other than the side opening 64 may be formed in the circumferential portion ofthe backup member 6.

As shown in FIG. 8B, an opening width W ofthe side opening 64 is defined by the part of the inner surface 612 of the first disc portion 61 and the part of the inner surface 622 of the second disc portion 62. As shown in FIGS. 8A and 8C, a depth DP of the side opening 64 is defined by the one end surface 631 and the another end surface 632 of the side wall portion 63. Due to the cylindrical form of the backup member 6, the depth DP varies along a length D2 of the side opening 64. As shown in FIG. 8A, the side opening 64 has a maximum depth DP1 where the depth DP is at its maximum, at approximately the middle of the length D2. The depth DP gradually decreases along the length D2 from the position of the maximum depth DPI to the one end surface 631 and from the position ofthe maximum depth DP1 to the another end surface 632. In this embodiment, the depth DP is equal to the distance between a plane (imaginary plane) including the one end surface 631 and the another end surface 632 and the rim of the first disc portion 61 (the rim ofthe second disc portion 81).

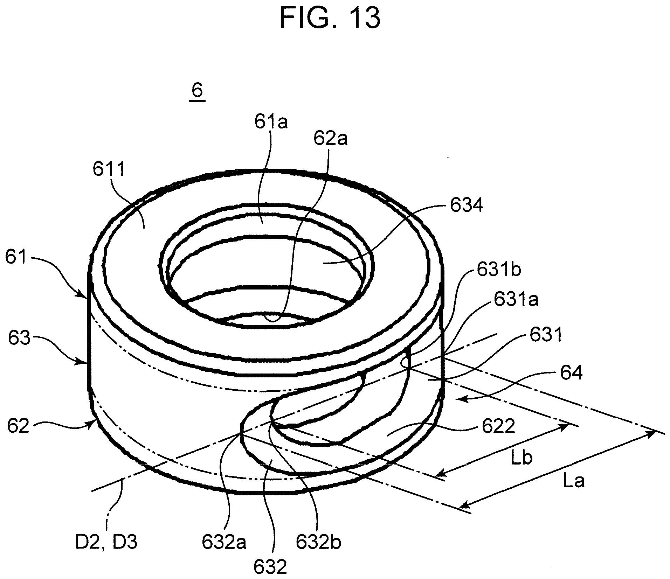

As shown in FIGS. 7A and 8A, the one end surface 631 and the another end surface 632 of the side wall portion 63 lie at one end and the other end of the length D2 of the side opening 64, respectively. The one end surface 631 and the another end surface 632 extend along the length D2 of the side opening 64. The one end surface 631 and the another end surface 632 may have slight irregularities or may be in the form of a convex surface of or a concave surface as long as they generally extend along the length D2 of the side opening 64. However, in the case that the one end surface 631 and the another end surface 632 are flat and in parallel with the length D2 of the side opening 64 (in an extending direction D3 of a guiding portion 81) (FIG. 7A) or in the form of a concave surface extending in parallel with the length D2 (in the direction D3) (FIG. 13), the backup member 6 can be stably moved along the guiding portion 81 as explained in the description of a manufacturing method below. In the backup member 6 of this embodiment, the one end surface 631 and the another end surface 632 are included in the same plane (imaginary plane). The side opening 64 has a first length La that is equal to the distance between an outer edge 631a of the one end surface 631 and an outer edge 632a of the another end surface 632. The length D2 perpendicularly intersects the central axis C and is on the straight line connecting the outer edge 631a of the one end surface 631 and the outer edge 632a of the another end surface 632. The outer edge 631a of the one end surface 631 defines the boundary between the one end surface 631 and an outer circumferential surface 633 of the side wall portion 63, and the outer edge 632a of the another end surface 632 defines the boundary between the another end surface 632 and the outer circumferential surface 633 of the side wall portion 63.

In this embodiment, the side opening 64 has a flat shape (slit shape) with the first length La between the outer edge 63 la of the one end surface 631 and the outer edge 632a ofthe another end surface 632 being greater than the opening width W, but is not limited to this shape. The opening width W may be made to be greater than the first length La. The length of the bottom end of the side opening 64 is defined by an inner edge 631b of the one end surface 631 and an inner edge 632b of the another end surface 632. The side wall opening 64 has a second length Lb that is equal to the distance between the inner edge 631b of the one end surface 631 and the inner edge 632b ofthe another end surface 632. The first length La is greater than the second length Lb. The inner edge 631b of the one end surface 631 defines the boundary between the one end surface 631 and an inner circumferential surface 634 of the side wall portion 63, and the inner edge 632b ofthe another end surface 632 defines the boundary between the another end surface 632 and the inner circumferential surface 634 ofthe side wall portion 63.

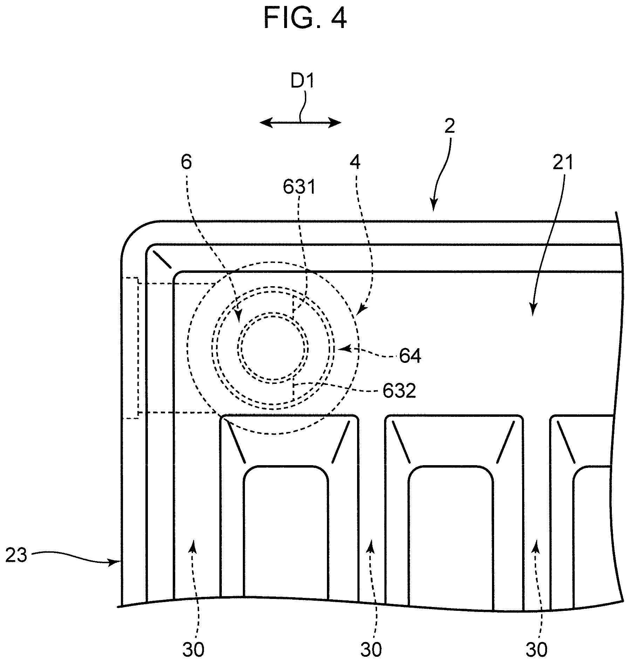

As shown in FIG. 4, the one end surface 631 and the another end surface 632 lie between a first path 30 located at one end in the direction D1 (path 30 at the left end shown in FIG. 4) and a second path 30 adjacent to the first path 30. In this embodiment, the inner circumferential surface 634 of the side wall portion 63 has an inner diameter greater than that of the inflow opening 61a. The inner circumferential surface 634 of the side wall portion 63 defines a hollow interior of the backup member 6. As shown in FIGS. 4 and 6, the inlet 21a and the backup member 6 lie between the first path 30 and the second path 30 in the direction D1.

### [Guide Member]

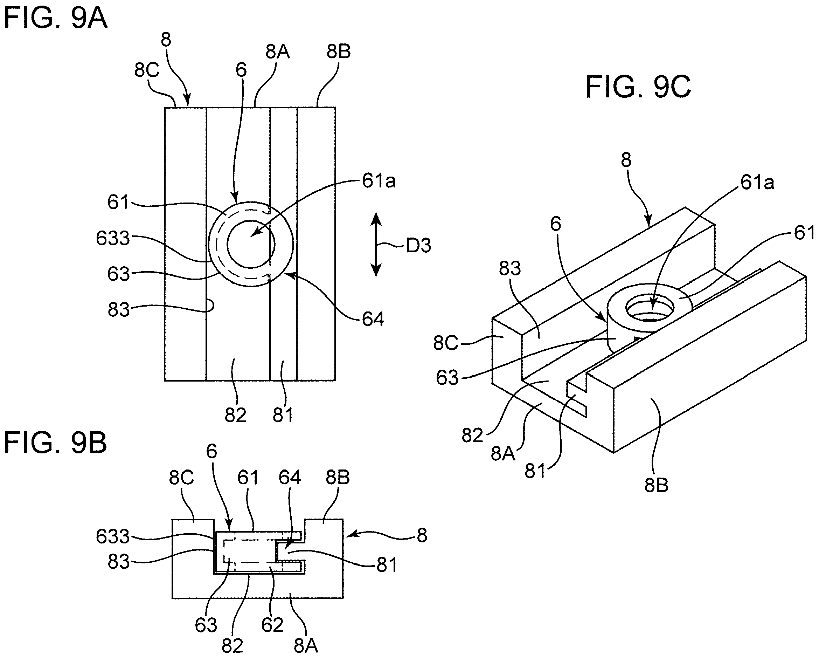

FIGS. 9A to 9C each show a guide member 8 serving as a jig for use in the manufacturing method of the panel radiator, and the backup member 6 disposed on the guide member 8. As shown in FIGS. 9A to 9C, the guide member 8 includes a bottom portion 8A having a top surface, and a pair of side walls 8B and 8C standing upright on the widthwise opposite ends of the bottom portion 8A. The guide member 8 includes at least a guiding portion 81 for guiding the backup member 6 to a predetermined position P. The guiding portion 81 projects from the inner surface of the side wall 8B on one side toward the side wall 8C on the other side. The guiding portion 81 is in the form of a rail extending straight in the direction D3. The guiding portion 81 is disposed above the top surface ofthe bottom portion 8A.

The guiding portion 81 has a width slightly smaller than the opening width W of the side opening 64. This makes it possible to improve the stability of the backup member 6 in the widthwise direction ofthe side opening 64 during the movement ofthe backup member 6.

In this embodiment, the guiding portion 81 further includes a guiding surface 82 to improve the stability of movement. The guiding surface 82 is defined by the top surface of the bottom portion 8A, and is in the form of a flat surface which comes into contact with the outer surface 611 ofthe first disc portion 61 or the outer surface 621 ofthe second disc portion 62.

In this embodiment, the guiding portion 81 further includes a guiding side surface 83 to further improve the stability of movement. The guiding side surface 83 is defined by a flat surface standing upright on the edge that is opposite to the guiding portion 81. The guiding side surface 83 faces a part of the outer circumferential surface 633 of the side wall portion 63 that is opposite to the side opening 64. At this time, the guiding side surface 83 is close to or in contact with the outer circumferential surface 633 of the side wall portion 63. The guiding side surface 83 is defined by the inner surface ofthe side wall 8C.

### [Method for Manufacturing Panel Radiator]

Now, the method for manufacturing the panel radiator 1 according to the present embodiment will be described. The manufacturing method ofthis embodiment includes at least a step of placing the backup member 6 at the predetermined position P. The manufacturing method of this embodiment further includes in addition to the above-mentioned step, a step of securing the backup member 6 disposed at the predetermined position P to the panel member 2A, a step of stacking the panel member 2B on the panel member 2A, and a step ofjoining the panel members 2A and 2B. Hereinafter, each step will be described.

### (Mounting Step and Placing Step)

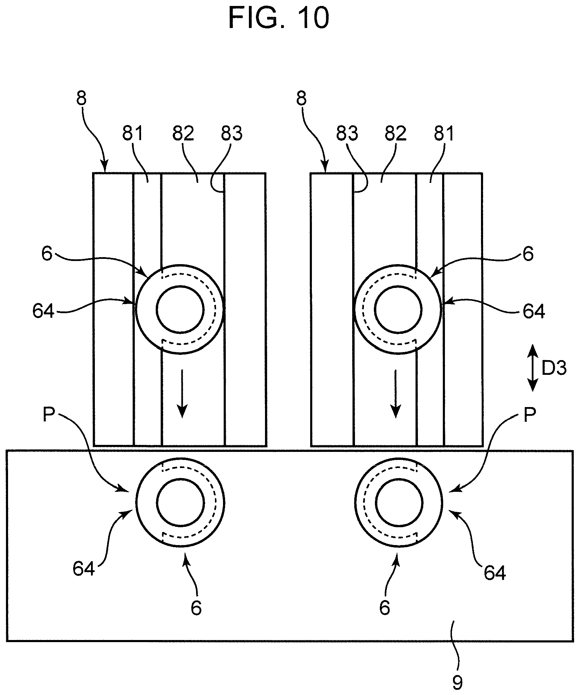

FIG. 10 is a plan view illustrating a mounting step and the placing step of the method for manufacturing the panel radiator 1 according to the present embodiment. In these steps, the above-described guide member 8 can be used for guiding the backup member 6 to the predetermined position P. A stand 9 is provided near the guide member 8. In this embodiment, the predetermined position P is set on the top surface ofthe stand 9.

The guide member 8 is disposed with the guiding portion 81 extending in the direction D3 toward the predetermined position P. Further, the position of the guiding position 81 of the guide member 8 is set to allow the side opening 64 of the backup member 6 mounted thereto to face in a predetermined direction. It is preferred that the top surface of the stand 9 is located at approximately the same height as the guiding surface 82 of the guide member 8. In this embodiment, the backup member 6 is mounted to each of the two panels 2A. Therefore, two guide members 8 are disposed adjacent to the stand 9.

First, in the mounting step, each backup member 6 is mounted to each guide member 8 to be in an initial position in which the rail-like guiding portion 81 is held in the side opening 64 of the backup member 6, the outer surface 611 or the outer surface 621 of the backup member 6 is in contact with the guiding surface 82, and the outer circumferential surface 633 of the backup member 6 faces the guiding side surface 83.

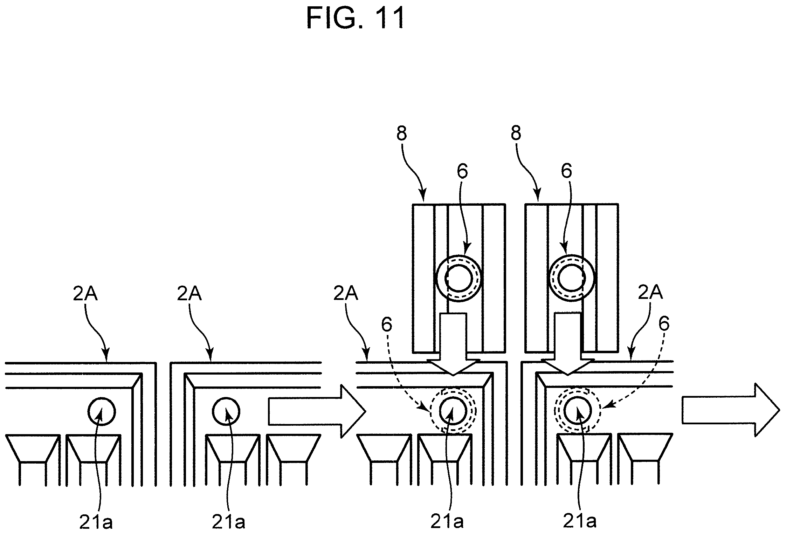

Thereafter, in the placing step, the backup member 6 in the initial position is moved to the predetermined position P along the guiding portion 81. The backup member 6 moving toward the predetermined position P eventually goes out of the end of the guide member 8, and then comes to the predetermined position P. The side opening 64 of the backup member 6 disposed at the predetermined position P faces in the predetermined direction. In this embodiment, as shown in FIGS. 10 and 11, the side openings 64 ofthe two backup members 6, 6 face in opposite directions at the respective predetermined positions P. This arrangement is associated with the orientations of the panel members 2A which are disposed in a face-to-face manner in the below-described step. However, the orientations of the side openings 64 at the predetermined positions P are not limited to the above example. The backup members 6 can be moved manually by an operator, but are preferred to be moved automatically in automated equipment.

### (Moving Step and Securing Step)

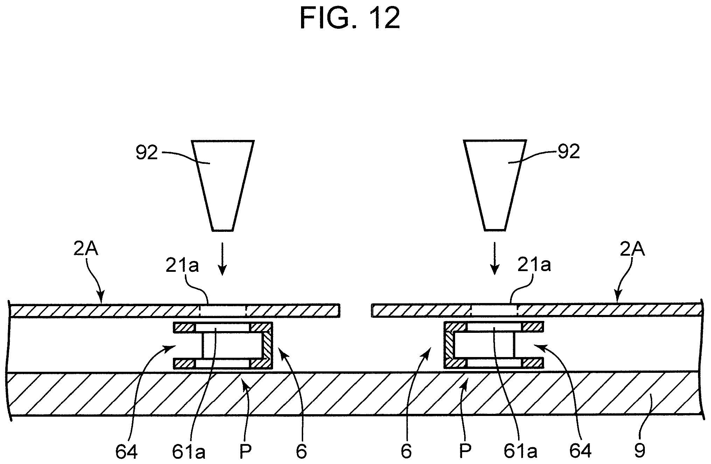

FIG. 11 is a plan view illustrating a moving step and the securing step of the method for manufacturing the panel radiator 1. FIG. 12 is a sectional view illustrating the securing step. In these steps, after bringing the backup members 6 disposed at the predetermined positions P into alignment with the inlets 21a of the panel members 2A, the backup members 6 are secured to the panel members 2A. Specifically, in the moving step, the panel members 2A are moved with respect to the backup members 6 so that the inlets 21a respectively face the backup members 6 as shown in FIG. 11, the backup members 6 being disposed at the predetermined positions P in the placing step as shown in FIG. 10. In this embodiment, the panel members 2A are moved toward the backup members 6. However, instead of moving the panel members 2A, the stand 9 and the backup members 6 disposed thereon may be made to move toward the panel members 2A. In the securing step, the portion around the inlet 21a of each of the panel members 2A having been disposed while facing the backup members 6 in the above-described manner is secured to the corresponding backup member 6.

This embodiment uses an automated equipment to move the panel members 2A with respect to the backup members 6, as shown in FIG. 11. As shown in FIGS. 11 and 12, the panel members 2A are disposed above the backup members 6 so that the inlets 21a respectively face the backup members 6 disposed at the predetermined positions P. Thereafter, the portion around the inlet 21a of each of the panel members 2A having been disposed to face the backup members 6 in the above-described manner is secured to the corresponding backup member 6.

The way of securing these components are not limited to a specific one, and pushing members 92 as shown in FIG. 12 can be used, for example. Each of the pushing members 92 has a tapering shape with the outer diameter decreasing downward. The outer diameter of the lower end of the pushing member 92 is smaller than the inner diameter of the inlet 21a of the panel member 2A and the inner diameter of the inflow opening 61a of the backup member 6, and the outer diameter of the upper end of the pushing member 92 is greater than the inner diameter of the inlet 21a. In addition, the inner diameter of the inlet 21a of the panel member 2A is smaller than the inner diameter of the inflow opening 61a of the backup member 6. Therefore, when the pushing member 92 is lowered and inserted into the inlet 21a and the inflow opening 61a, the portion around the inlet 21a (the peripheral portion of the inlet 21a) is deformed so that the inner diameter of the inlet 21a expands and the portion around the inlet 21a (the peripheral portion of the inlet 21a) slightly goes into the inflow opening 61a. In other words, the portion around the inlet 21a is caulked. Consequently, the portion around the inlet 21a of the panel member 2A is secured to the backup member 8. The way of securing the backup members 6 to the panel members 2A are not limited to the above-described way, and another securing way such as welding may be employed.

### (Stacking Step)

In the stacking step, the panel member 2B is stacked on the panel member 2A. In the stacking step, the panel member 2A and the panel member 2B are stacked in the thickness direction (stacked in the state as shown in FIG. 5, for example).

### (Joining Step)

In the joining step, the panel member 2A and the panel member 2B which have been stacked in the stacking step are joined together. The way of joining is not limited to a specific one, and welding can be employed, for example. In this embodiment, the peripheral portion of the panel member 2A and the peripheral portion of the panel 2B are welded, and the recessed parts 23b ofthe panel member 2A and the recessed parts 23b ofthe panel member 2B are welded. Consequently, the panel 2 is obtained.

### (Another Step)

The panel radiator 1 of this embodiment includes the fin 7 and the plurality of joints 4, 5 provided between the two panels 2, 2. Therefore, the manufacturing method of this embodiment further includes a step of installing the fin 7 and the joints 4, 5 between the two panels 2, 2. The fin 7 and the joints 4, 5 can be joined to the panels 2, 2 in various joining ways. The joining ways are not limited to specific ones, and welding can be employed, for example.

### [Summary of Embodiment]

In the above-described embodiment, the backup member 6 is placed at the predetermined position P with the side opening 64 facing in the predetermined direction after being moved to the predetermined position P along the guiding portion 81 while the guiding portion 81 is inserted in the side opening 64. Therefore, it is possible to place the backup member 6 in the desired orientation efficiently.

In the above-described embodiment, the backup member 6 includes the first disc portion 61 formed with the inflow opening 61a, the second disc portion 62 facing to the first disc portion 61 with a space in the thickness direction of the first disc portion 61, and the side wall portion 63. The side wall portion 63 has the one end surface 631 provided at one end in a circumferential direction and the another end surface 632 provided at an another end in the circumferential direction. The side wall portion 63 extends in the circumferential direction between the first disc portion 61 and the second disc portion 62. The side wall portion 63 connects the first disc portion 61 and the second disc portion 62. The side opening 64 has the depth DP defined by the one end surface 631 and the another end surface 632. In the placing step, the backup member 6 is moved to the predetermined position P along the guiding portion 81 with the one end surface 631 and the another end surface 632 being in contact with the guiding portion 81. Because the depth DP of the side opening 64 is defined by the one end surface 631 and the another end surface 632 of the side wall portion 63, it is possible to stably move the backup member 6 to the predetermined position P along the guiding portion 81 with the one end surface 631 and the another end surface 632 being in contact with the guiding portion 81.

In the above-described embodiment, the one end surface 631 and the another end surface 632 are flat and in parallel with the guiding portion 81 extending in the direction D3. Therefore, it is possible in the placing step to allow the one end surface 631 and the another end surface 632 to come into contact with the guiding portion 81 over a large area. This makes it possible to more stably move the backup member 6 along the guiding portion 81.

In the above-described embodiment, the side opening 64 has the opening width W defined by a part of the inner surface of the first disc portion 61 and a part of the inner surface of the second disc portion 62 opposite to the part of the inner surface of the first disc portion 61. In the placing step, the backup member 6 is moved to the predetermined position P along the guiding portion 81 with the part of the inner surface of the first disc portion 61 and the part of the inner surface of the second disc portion 62 facing the guiding portion 81. Because the part of the inner surface of the first disc portion 61 and the part of the inner surface of the second disc portion 62 face the guiding portion 81 in the placing step as described, it is possible to improve the stability of the side opening 64 not only in the direction of depth DP but also in the widthwise direction of the side opening 64 during the movement ofthe backup member 6.

In the above-described embodiment, the first disc portion 61 has the outer surface 611 on the outer side thereof in the thickness direction and the second disc portion 62 has the outer surface 621 on the outer side thereof in the thickness direction. In the placing step, the backup member 6 is moved to the predetermined position P along the guiding portion 81 with the outer surface 611 of the first disc portion 61 or the outer surface 621 of the second disc portion 62 being in contact with the guiding surface 82 extending toward the predetermined position P. Therefore, it is possible to further improve the stability of the backup member 6 during the movement.

In the above-described embodiment, the side wall portion 63 has the outer circumferential surface 633. In the placing step, the backup member 6 is moved to the predetermined position P along the guiding portion 81 with the outer circumferential surface 633 of the side wall portion 63 facing the guiding side surface 83 extending toward the predetermined position P. Therefore, it is possible to further improve the stability ofthe backup member 6 during the movement.

The panel radiator 1 of the above-described embodiment includes the backup member 6 shown in FIG. 7A. Further, the inlet 21a is formed at one end of the first header 21 in the direction Dl, and the outlet 22a is formed at one end ofthe second header 22 in the direction D1 that lies on the same side as the inlet 21a. The side opening 64 opens to the other end in the direction D1 in the first header 21.

In the panel radiator 1 of the above-described embodiment, only the side opening 64 opens on the side of the backup member. This configuration makes it possible to further prevent the liquid flowing out of the backup member 6 from flowing disproportionately to the first path 30 that is located at the one end close to the inlet. Specifically, as compared to the case of a reference example shown in FIG. 7B in which a backup member 110 is disposed at the same position in the first header 21 but further includes openings 111 opening to the first path 30, this configuration makes it possible to prevent the liquid flowing out of the backup member 6 from flowing disproportionately to the first path 30 that is located at the one end close to the inlet.

In the panel radiator 1 of the above-described embodiment, the plurality of paths 30 include the first path 30 at one end in the direction D1 and the second path 30 adjacent to the first path 30, and the one end surface 631 and the another end surface 632 are located between the first path 30 and the second path 30 in the direction D1. This configuration, in the case that each of the one end surface 631 and the another end surface 632 is flat and in parallel with the length direction D2 of the side opening, makes it possible to effectively allow the liquid flowing out of the side opening 64 to flow also to the second path 30.

In the panel radiator 1 of the above-described embodiment, each of the one end surface 631 and the another end surface 632 is flat and in parallel with the length direction D2 of the side opening 64. Further, the one end surface 631 and the another end surface 632 extend in a direction intersecting (for example, in a direction perpendicularly intersecting) the direction D1. This makes it possible to allow the liquid having been introduced in the backup member 6 through the inflow opening 61a to flow to the inside of the first header 21 over a wide range of angles.

### < Modifications >

The present invention is not limited to the above-described embodiment, and various changes and modifications may be made without departing from the spirit ofthe invention.

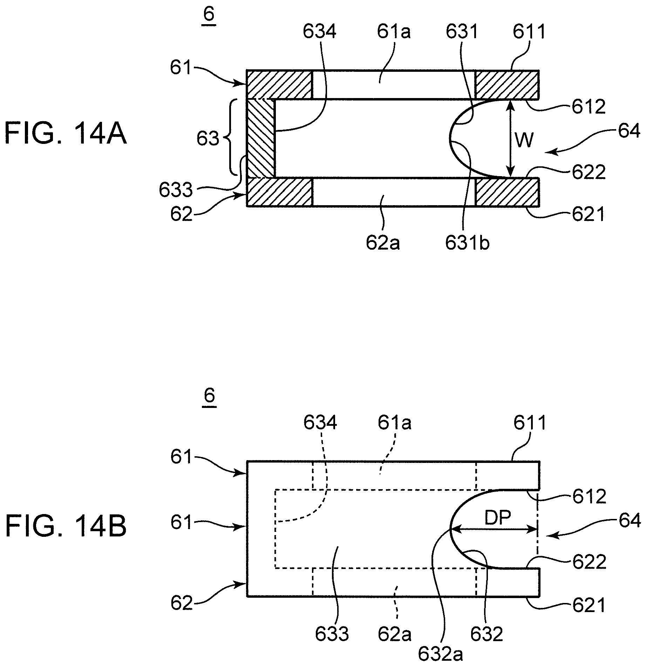

FIG. 13 is a modified backup member 6 according to the embodiment. FIG. 14A is a sectional view of the modified backup member 6 shown in FIG. 13. FIG. 14B is a side view of the modified backup member 6 shown in FIG. 13. As shown in FIGS. 13, 14A and 14B, the modified backup member 6 differs from the backup member 6 shown in, for example, FIG. 7A only in the configuration of a side wall portion 63.

In the modified backup member 6, the side wall portion 63 includes one end surface 631 provided at one end in a circumferential direction and another end surface 632 provided at an another end in the circumferential direction. The one end surface 631 and the another end surface 632 are not flat but in the form of a recessed curved surface. The one end surface 631 and the another end surface 632 extend in parallel with a length direction D2 of a side opening 64 and a guiding portion 81 extending in the direction D3.

Also in this modification, the side opening 64 has a depth DP defined by the one end surface 631 and the another end surface 632. In the case that the one end surface 631 and the another end surface 632 are in the form of a recessed curved surface as in this modification, the depth DP is equal to the distance between an imaginary plane extending in parallel with a central axis C and passing the innermost point of the one end surface 631 and the innermost point of the another end surface 632 and the rim of the first disc portion 61 (the rim of the second disc portion 62) as shown in FIG. 14B.

Also in this modification, the side opening 64 has a first length La defined by an outer edge 631a of the one end surface 631 and an outer edge 632a ofthe another end surface 632 and a second length Lb defined by an inner edge 631b of the one end surface 631 and an inner edge 632b ofthe another end surface 632. The first length La is greater than the second length Lb.

Also in this modification, in a placing step, the backup member 6 is moved to a predetermined position P along a guiding portion 81 with the one end surface 631 and the another end surface 632 being in contact with the guiding portion 81. In this case, the guiding portion 81 is preferably made to have a projection that fits in the recessed curved surface of each ofthe one end surface 631 and the another end surface 632.

The above-described embodiment illustrates the case where the liquid that is introduced into the panel radiator is hot water. However, the liquid is not limited to hot water. For example, oil may alternatively be used as the liquid.

The above-described embodiment illustrates the case where in the backup member 6, the first disc portion 61 is formed with the inflow opening 61a and the second disc portion 62 is also formed with the inflow opening 62a. However, one of these inflow openings may be omitted. In the case that the second disc portion 62 has no inflow opening 62a, the second disc portion 62 is in the form of a solid disc.

The above-described embodiment illustrates the case where the panel radiator 1 includes the two panels 2, 2, but the invention is not limited to this configuration. A single panel, or three or more panels 2 may alternatively be provided.

The above-described embodiment illustrates the manufacturing method using the guide member 8 including the guiding portion 81, the guiding surface 82, and the guiding side surface 83, but the invention is not limited to this configuration. For example, a guide member 8 without one or both of the guiding surface 82 and the guiding side surface 83 may alternatively be used.

The above-described embodiment illustrates the case where only the side opening 64 is formed in the circumferential portion of the backup member 6. However, the circumferential portion of the backup member 6 may be formed with, in addition to the side opening 64, one or more openings that communicate with the inflow opening 61a.

The above-described embodiment illustrates the case where the predetermined position P is set on the top surface of the stand 9, but the position is not limited thereto. For example, the predetermined position P may be set on the portion around the inlet 21a ofthe panel member 2A, for example. In the case of this modification, in the step of placing the backup member 6 at the predetermined position P, the backup member 6 is moved to the predetermined position P of the panel member 2A along the guiding portion 81 to lie at the predetermined position P (the portion around the inlet 21a). Therefore, the stand 9 can be omitted in this modification.

The above-described embodiment illustrates the case where the backup members 6 and the panel members 2A move in the horizontal direction in the manufacture ofthe panel radiator 1, but the invention is not limited to this way. Those members may be made to move in a direction oblique to the horizontal direction.

The above-described embodiment is summarized as follows.

The above-described embodiment is directed to a method for manufacturing a panel radiator in which a backup member including an inflow opening for liquid and a side opening communicating with the inflow opening is disposed at a position corresponding to an inlet for liquid provided in a panel member. The manufacturing method comprises steps of: inserting a guide portion extending toward a predetermined position into the side opening of the backup member; placing the backup member at the predetermined position with the side opening facing in a predetermined direction by moving the backup member to the predetermined position along the guide portion while the guide portion is inserted in the side opening; and securing the backup member disposed at the predetermined position to the panel member at a position corresponding to the inlet ofthe panel member.

In this method, the backup member is placed at the predetermined position with the side opening facing in the predetermined direction after being moved to the predetermined position along the guide portion while the guide portion is inserted in the side opening. Therefore, it is possible to place the backup member in the desired orientation efficiently.

In the above-described method for manufacturing the panel radiator, it is preferred that the backup member includes a first disc portion formed with the inflow opening, a second disc portion facing the first disc portion with a space in a thickness direction of the first disc portion; and, and a side wall portion having one end surface provided at one end in a circumferential direction and an another end surface provided at an another end in the circumferential direction, extending in the circumferential direction between the first disc portion and the second disc portion to connect the first disc portion and the second disc portion, that the side opening has a depth defined by the one end surface and the another end surface, and that in the placing step, the backup member is moved to the predetermined position along the guide portion with the one end surface and the another end surface being in contact with the guide portion.

In this method, the depth of the side opening is defined by the one end surface and the another end surface ofthe side wall portion, and it is possible to stably move the backup member to the predetermined position along the guide portion with the one end surface and the another end surface being in contact with the guide portion.

In the above-described method for manufacturing the panel radiator, it is preferred that the one end surface and the another end surface extend in parallel with the guide portion.

In this method, because the one end surface and the another end surface extend in parallel with the guide portion, it is possible to allow the one end surface and the another end surface to come into contact with the guide portion over a large area in the placing step. This makes it possible to more stably move the backup member along the guide portion.

In the above-described method for manufacturing the panel radiator, it is preferred that the side opening has an opening width defined by a part of an inner surface of the first disc portion and a part of an inner surface of the second disc portion opposite to the part of the inner surface of the first disc portion, and that in the placing step, the backup member is moved to the predetermined position along the guide portion with the part of the inner surface of the first disc portion and the part ofthe inner surface ofthe second disc portion facing the guide portion.

In this method, the opening width of the side opening is defined by the part of the inner surface of the first disc portion and the part of the inner surface of the second disc portion, the parts of the inner surfaces facing the guide portion in the placing step. This makes it possible to improve the stability ofthe side opening not only in the depth direction but also in the widthwise direction ofthe side opening during the movement in the placing step.

In the above-described method for manufacturing the panel radiator, it is possible to further improve the stability of movement in the case that the first disc portion has an outer surface on an outer side thereof in a thickness direction, the second disc portion has an outer surface on an outer side thereof in the thickness direction, and in the placing step, the backup member is moved to the predetermined position along the guide portion with the outer surface of the first disc portion or the outer surface of the second disc portion being in contact with a guiding surface extending toward the predetermined position.

In the above-described method for manufacturing the panel radiator, it is possible to further improve the stability of movement in the case that the side wall portion has an outer circumferential surface, and in the placing step, the backup member is moved to the predetermined position along the guide portion with the outer circumferential surface of the side wall portion facing a guiding side surface extending toward the predetermined position.

The above-described embodiment is directed to a backup member for being disposed at a position corresponding to an inlet for liquid formed in a panel radiator, including an inflow opening for allowing liquid to flow in through the inlet and a side opening communicating with the inflow opening. The backup member comprises: a first disc portion provided with the inflow opening; a second disc portion facing to the first disc portion with a space in a thickness direction of the first disc portion; and a side wall portion having one end surface provided at one end in a circumferential direction and an another end surface provided at an another end in the circumferential direction, extending in the circumferential direction between the first disc portion and the second disc portion to connect the first disc portion and the second disc portion. The side opening has an opening width defined by a part of an inner surface of the first disc portion and a part of an inner surface of the second disc portion and a depth defined by the one end surface and the another end surface. The side opening has a first length defined by an outer edge of the one end surface and an outer edge of the another end surface and a second length defined by an inner edge of the one end surface and an inner edge of the another end surface, the first length being greater than the second length.

In this configuration, because the backup member includes the above-described side opening, it is possible to place the backup member in the desired orientation efficiently in the manufacture of the panel radiator. Specifically, it is possible in the manufacture of the panel radiator to stably move the backup member along the guide portion while the guide portion is inserted in the side opening and in contact with the one end surface and the another end surface after inserting the guide portion to the bottom of the depth of the side opening defined by the one end surface and the another end surface. Further, because the opening width of the side opening is defined by the part of the inner surface of the first disc portion and the part of the inner surface of the second disc portion, it is possible in the manufacture of the panel radiator to stably move the backup member along the guide portion with the parts of the inner surfaces being in contact with the guide portion. This makes it possible to improve the stability of the side opening not only in the depth direction but also in the widthwise direction of the side opening in the manufacture of the panel radiator.

In the above-described backup member, it is preferred that each of the one end surface and the another end surface extends in parallel with a length direction of the side opening.

In this configuration, because the one end surface and the another end surface extend in parallel with the length direction of the side opening, it is possible, by placing the guide portion for use in the manufacture in parallel with the length direction of the side opening, to allow the one end surface and the another end surface to come into contact with the guide portion over a large area. This makes it possible to more stably move the backup member along the guide portion in the manufacture of the panel radiator.

The above-described embodiment is directed to a panel radiator which comprises: a first header extending in a specific direction and including the inlet for liquid; a second header extending in the specific direction and including an outlet for liquid; a flow dividing portion including a plurality of paths extending from the first header to the second header and aligned in the specific direction; and the above-described backup member provided in the first header for allowing the liquid having been introduced through the inlet to flow to the inside of the first header through the side opening.

In this configuration, because the backup member includes the above-described side opening, it is possible to place the backup member in the desired orientation efficiently in the manufacture of the panel radiator.

In the above-described panel radiator, it is preferred that the inlet is formed at one end of the first header in the specific direction, that the outlet is formed at one end of the second header in the specific direction that lies on the same side as the inlet, and that the side opening opens to the other end in the specific direction in the first header.

The panel radiator may be configured such that the inlet is provided at one end of the first header and the outlet is provided at one end of the second header that lies on the same side as the inlet, in consideration of limitations of space available for placing the supply pipe to be connected to the inlet and the discharge pipe to be connected to the outlet. In this case, the fluid having been introduced into the first header from the inlet through the backup member is liable to flow concentratedly to the first path at the one end close to the inlet. Such unbalanced flow distribution may cause the flow rate in the first path to be greater than the flow rate in the other paths, which in turn may result in the decrease in the radiation performance of the entire panel radiator.

Accordingly, in this configuration, the side opening opens to the other end in the specific direction in the first header, which makes it possible to prevent the liquid flowing out of the side opening from flowing concentratedly to the first path that is located at the one end close to the inlet.

In the above-described panel radiator, it is preferred that only the side opening opens on a side of the backup member.

In this configuration, because only the side opening opens on the side of the backup member, it is possible to further prevent the liquid flowing out of the backup member from flowing concentratedly to the first path that is located at the one end close to the inlet.

In an embodiment of the above-described panel radiator, the plurality of paths include a first path at the one end in the specific direction and a second path adjacent to the first path, and the one end surface and the another end surface are located between the first path and the second path in the specific direction. In this configuration, in the case that each of the one end surface and the another end surface extends in parallel with a length of the side opening, it is possible to effectively allow the liquid flowing out of the side opening to flow to the second path as well.

### Reference Signs List

- 1: panel radiator
- 2: panel
- 2A: panel member
- 2B: panel member
- 21: first header
- 21a: inlet
- 22: second header
- 22a: outlet
- 23: flow dividing portion
- 30: path
- 4, 5: joint
- 6: backup member
- 61: first disc portion
- 61a: inflow opening
- 611: outer surface of the first disc portion
- 612: inner surface of the first disc portion
- 62: second disc portion
- 62a: inflow opening
- 621: outer surface of the second disc portion
- 622: inner surface of the second disc portion
- 63: side wall portion
- 631: one end surface of the side wall portion
- 632: another end surface of the side wall portion
- 633: outer circumferential surface of the side wall portion
- 64: side opening
- 7: fin
- 8: guide member
- 81: guiding portion
- 82: guiding surface
- 83: guiding side surface
- 91: stand
- 92: pushing member
- 100: heating system
- 101: supply pipe
- 102: discharge pipe
- D1: specific direction
- D2: longitudinal direction of the side opening
- D3: extending direction of the guiding portion
- P: predetermined position

## Claims

1. A method for manufacturing a panel radiator (1) in which a backup member (6) including an inflow opening (61a) for liquid and a side opening (64) communicating with the inflow opening (61a) is disposed at a position corresponding to an inlet (21a) for liquid provided in a panel member (2A, 2B), **characterized in that** the method comprises steps of:
inserting a guide portion (81) extending toward a predetermined position (P) into the side opening (64) of the backup member (6);
placing the backup member (6) at the predetermined position (P) with the side opening (64) facing in a predetermined direction by moving the backup member (6) to the predetermined position (P) along the guide portion (81) while the guide portion (81) is inserted in the side opening (64); and
securing the backup member (6) disposed at the predetermined position (P) to the panel member (2A, 2B) at a position corresponding to the inlet (21a) of the panel member (2A, 2B).

2. The method for manufacturing a panel radiator (1) according to claim 1, wherein the backup member (6) includes
a first disc portion (61) formed with the inflow opening (61a),
a second disc portion (62) facing the first disc portion (61) with a space in a thickness direction of the first disc portion (61); and
a side wall portion (63) having one end surface provided at one end in a circumferential direction and an another end surface provided at an another end in the circumferential direction, extending in the circumferential direction between the first disc portion (61) and the second disc portion (62) to connect the first disc portion (61) and the second disc portion, the side opening (64) has a depth defined by the one end surface and the another end surface, and
in the placing step, the backup member (6) is moved to the predetermined position (P) along the guide portion (81) with the one end surface and the another end surface being in contact with the guide portion (81).

3. The method for manufacturing a panel radiator (1) according to claim 2, wherein the one end surface and the another end surface extend in parallel with the guide portion (81) .

4. The method for manufacturing a panel radiator (1) according to claim 2 or 3, wherein the side opening (64) has an opening width defined by a part of an inner surface of the first disc portion (61) and a part of an inner surface of the second disc portion (62) opposite to the part of the inner surface of the first disc portion (61), and
in the placing step, the backup member (6) is moved to the predetermined position (P) along the guide portion (81) with the part of the inner surface of the first disc portion (61) and the part of the inner surface of the second disc portion (62) facing the guide portion (81).

5. The method for manufacturing a panel radiator (1) according to any one of claims 2 to 4, wherein
the first disc portion (61) has an outer surface on an outer side thereof in a thickness direction,
the second disc portion (62) has an outer surface on an outer side thereof in the thickness direction, and
in the placing step, the backup member (6) is moved to the predetermined position (P) along the guide portion (81) with the outer surface of the first disc portion (611) or the outer surface of the second disc portion (621) being in contact with a guiding surface (82) extending toward the predetermined position (P).

6. The method for manufacturing a panel radiator (1) according to any one of claims 2 to 5, wherein
the side wall portion (63) has an outer circumferential surface, and
in the placing step, the backup member (6) is moved to the predetermined position (P) along the guide portion (81) with the outer circumferential surface of the side wall portion (63) facing a guiding side surface (83) extending toward the predetermined position (P).

7. A back-up member for being disposed at a position corresponding to an inlet (21a) for liquid formed in a panel radiator (1), including an inflow opening (61a) for allowing liquid to flow in through the inlet (21a) and a side opening (64) communicating with the inflow opening (61a), whereby the backup member (6) comprises:
a first disc portion (61) provided with the inflow opening (61a);
a second disc portion (62) facing to the first disc portion (61) with a space in a thickness direction of the first disc portion (61); and
a side wall portion (63) having one end surface provided at one end in a circumferential direction and an another end surface provided at an another end in the circumferential direction, extending in the circumferential direction between the first disc portion (61) and the second disc portion (62) to connect the first disc portion (61) and the second disc portion (62), wherein
the side opening (64) has an opening width defined by a part of an inner surface of the first disc portion (612) and a part of an inner surface of the second disc portion (622) and a depth defined by the one end surface and the another end surface, and
the side opening (64) has a first length defined by an outer edge of the one end surface and an outer edge of the another end surface and a second length defined by an inner edge of the one end surface and an inner edge of the another end surface, **characterized by** the first length being greater than the second length.

8. The back-up member according to claim 7, wherein
each of the one end surface and the another end surface extends in parallel with a length direction of the side opening (64).

9. A panel radiator (1), comprising:
a first header (21) extending in a specific direction (D1) and including the inlet (21a) for liquid;
a second header (22) extending in the specific direction (D1) and including an outlet (22a) for liquid;
a flow dividing portion (23) including a plurality of paths (30) extending from the first header (21) to the second header (22) and aligned in the specific direction (D1); and
a backup member (6) according to claim 7 or 8 provided in the first header (21) for allowing the liquid having been introduced through the inlet (21a) to flow to the inside of the first header (21) through the side opening (64).

10. The panel radiator (1) according to claim 9, wherein
the inlet (21a) is formed at one end of the first header (21) in the specific direction (D1),
the outlet (22a) is formed at one end of the second header (22) in the specific direction (D1) that lies on the same side as the inlet (21a), and
the side opening (64) opens to the other end in the specific direction (D1) in the first header (21).

11. The panel radiator (1) according to claim 10, wherein only the side opening (64) opens on a side of the backup member (6).

12. The panel radiator (1) according to claim 10 or 11, wherein
the plurality of paths (30) include a first path (30) at the one end in the specific direction (D1) and a second path (30) adjacent to the first path (30), and
the one end surface and the another end surface are located between the first path (30) and the second path (30) in the specific direction (D1).

## Patentansprüche

1. Verfahren zur Herstellung eines Plattenheizkörpers (1), in dem ein Sicherungselement (6), das eine Einströmungsöffnung (61a) für Flüssigkeit und eine Seitenöffnung (64), die mit der Einströmungsöffnung (61a) kommuniziert, enthält, an einer Position angeordnet ist, die einem Einlass (21a) für Flüssigkeit entspricht, der in einem Plattenelement (2A, 2B) bereitgestellt ist, **dadurch gekennzeichnet, dass** das Verfahren die Schritte umfasst von:
Einsetzen eines Führungsabschnitts (81), der sich zu einer vorbestimmten Position (P), in die Seitenöffnung (64) des Sicherungselements (6) hinein erstreckt;
Platzieren des Sicherungselements (6) an der vorbestimmten Position (P), wobei die Seitenöffnung (64) in eine vorbestimme Richtung zeigt, durch Bewegen des Sicherungselements (6) entlang des Führungsabschnitts (81) zu der vorbestimmten Position (P), während der Führungsabschnitt (81) in der Seitenöffnung (64) eingesetzt ist; und
Befestigen des Sicherungselements (6), das an der vorbestimmten Position (P) angeordnet ist, an dem Plattenelement (2A, 2B) an einer Position, die dem Einlass (21a) des Plattenelements (2A, 2B) entspricht.

2. Verfahren zur Herstellung eines Plattenheizkörpers (1) nach Anspruch 1, wobei das Sicherungselement (6) enthält
einen ersten Scheibenabschnitt (61), der mit der Einströmungsöffnung (61a) gebildet ist;
einen zweiten Scheibenabschnitt (62), der dem ersten Scheibenabschnitt (61) mit einem Raum in einer Dickenrichtung des ersten Scheibenabschnitts (61) zugewandt ist; und
einen Seitenwandabschnitt (63) mit einer Stirnfläche, die an einem Ende in einer Umfangsrichtung bereitgestellt ist, und einer anderen Stirnfläche, die an einem anderen Ende in der Umfangsrichtung bereitgestellt ist, der sich in der Umfangsrichtung zwischen dem ersten Scheibenabschnitt (61) und dem zweiten Scheibenabschnitt (62) erstreckt, um den ersten Scheibenabschnitt (61) und den zweiten Scheibenabschnitt zu verbinden, wobei die Seitenöffnung (64) eine Tiefe aufweist, die durch die eine Stirnfläche und die andere Stirnfläche definiert ist, und
im Platzierungsschritt das Sicherungselement (6) zu der vorbestimmten Position (P) entlang des Führungsabschnitts (81) bewegt wird, wobei die eine Stirnfläche und die andere Stirnfläche mit dem Führungsabschnitt (81) in Kontakt sind.

3. Verfahren zur Herstellung eines Plattenheizkörpers (1) nach Anspruch 2, wobei sich die eine Stirnfläche und die andere Stirnfläche parallel zu dem Führungsabschnitt (81) erstrecken.

4. Verfahren zur Herstellung eines Plattenheizkörpers (1) nach Anspruch 2 oder 3, wobei die Seitenöffnung (64) eine Öffnungsbreite aufweist, die durch einen Teil einer Innenfläche des ersten Scheibenabschnitts (61) und einen Teil einer Innenfläche des zweiten Scheibenabschnitts (62) gegenüber dem Teil der Innenfläche des ersten Scheibenabschnitts (61) definiert ist, und
im Platzierungsschritt das Sicherungselement (6) zu der vorbestimmten Position (P) entlang des Führungsabschnitts (81) bewegt wird, wobei der Teil der Innenfläche des ersten Scheibenabschnitts (61) und der Teil der Innenfläche des zweiten Scheibenabschnitts (62) dem Führungsabschnitt (81) zugewandt sind.

5. Verfahren zur Herstellung eines Plattenheizkörpers (1) nach einem der Ansprüche 2 bis 4, wobei
der erste Scheibenabschnitt (61) eine Außenfläche an seiner Außenseite in einer Dickenrichtung hat,
der zweite Scheibenabschnitt (62) eine Außenfläche an seiner Außenseite in einer Dickenrichtung hat und
im Platzierungsschritt das Sicherungselement (6) zu der vorbestimmten Position (P) entlang des Führungsabschnitts (81) bewegt wird, wobei die Außenfläche des ersten Scheibenabschnitts (611) oder die Außenfläche des zweiten Scheibenabschnitts (621) mit einer Führungsfläche (82) in Kontakt sind, die sich zu der vorbestimmten Position (P) hin erstreckt.

6. Verfahren zur Herstellung eines Plattenheizkörpers (1) nach einem der Ansprüche 2 bis 5, wobei
der Seitenwandabschnitt (63) eine Außenumfangsfläche hat und
im Platzierungsschritt das Sicherungselement (6) zu der vorbestimmten Position (P) entlang des Führungsabschnitts (81) bewegt wird, wobei die Außenumfangsfläche des Seitenwandabschnitts (63) einer Führungsseitenfläche (83) zugewandt ist, die sich zu der vorbestimmten Position (P) hin erstreckt.

7. Sicherungselement zur Anordnung an einer Position, die einem Einlass (21a) für Flüssigkeit entspricht, der in einem Plattenheizkörper (1) gebildet ist, enthaltend eine Einströmungsöffnung (61a), um Flüssigkeit zu erlauben, durch den Einlass (21a) und eine Seitenöffnung (64), die mit der Einströmungsöffnung (61a) kommuniziert, einzuströmen,
wobei das Sicherungselement (6) umfasst:
einen ersten Scheibenabschnitt (61), der mit der Einströmungsöffnung (61a) bereitgestellt ist;
einen zweiten Scheibenabschnitt (62), der dem ersten Scheibenabschnitt (61) mit einem Raum in einer Dickenrichtung des ersten Scheibenabschnitts (61) zugewandt ist; und
einen Seitenwandabschnitt (63) mit einer Stirnfläche, die an einem Ende in einer Umfangsrichtung bereitgestellt ist, und einer anderen Stirnfläche, die an einem anderen Ende in der Umfangsrichtung bereitgestellt ist, der sich in der Umfangsrichtung zwischen dem ersten Scheibenabschnitt (61) und dem zweiten Scheibenabschnitt (62) erstreckt, um den ersten Scheibenabschnitt (61) und den zweiten Scheibenabschnitt (62) zu verbinden, wobei
die Seitenöffnung (64) eine Öffnungsbreite, die durch einen Teil einer Innenfläche des ersten Scheibenabschnitts (612) und einen Teil einer Innenfläche des zweiten Scheibenabschnitts (622) definiert ist, und eine Tiefe, die durch die eine Stirnfläche und die andere Stirnfläche definiert ist, aufweist, und
die Seitenöffnung (64) eine erste Länge, die durch einen Außenrand der einen Stirnfläche und einen Außenrand der anderen Stirnfläche definiert ist, und eine zweite Länge, die durch einen Innenrand der einen Stirnfläche und einen Innenrand der anderen Stirnfläche definiert ist, aufweist, **dadurch gekennzeichnet, dass**
die erste Länge größer als die zweite Länge ist.

8. Sicherungselement nach Anspruch 7, wobei
sich jede der einen Stirnfläche und der anderen Stirnfläche parallel zu einer Längenrichtung der Seitenöffnung (64) erstreckt.

9. Plattenheizkörper (1), umfassend:
ein erstes Sammelrohr (21), das sich in einer spezifischen Richtung (D1) erstreckt und den Einlass (21a) für Flüssigkeit enthält;
ein zweites Sammelrohr (22), das sich in der spezifischen Richtung (D1) erstreckt und eine Auslass (22a) für Flüssigkeit enthält;
eine Strömungsteilerabschnitt (23), der eine Vielzahl von Pfaden (30) enthält, die sich vom ersten Sammelrohr (21) zum zweiten Sammelrohr (22) erstrecken und in der spezifischen Richtung (D1) ausgerichtet sind; und
ein Sicherungselement (6) nach Anspruch 7 oder 8, das im ersten Sammelrohr (21) bereitgestellt ist, um der Flüssigkeit, die durch den Einlass (21a) eingeleitet wurde, zu erlauben, durch die Seitenöffnung (64) zur Innenseite des ersten Sammelrohrs (21) zu strömen.

10. Plattenheizkörper (1) nach Anspruch 9, wobei
der Einlass (21a) an einem Ende des ersten Sammelrohrs (21) in der spezifischen Richtung (D1) gebildet ist,
der Auslass (22a) an einem Ende des zweiten Sammelrohrs (22) in der spezifischen Richtung (D1) gebildet ist, das auf derselben Seite wie der Einlass (21a) liegt, und
die Seitenöffnung (64) sich zum anderen Ende hin in der spezifischen Richtung (D1) im ersten Sammelrohr (21) öffnet.

11. Plattenheizkörper (1) nach Anspruch 10, wobei sich nur die Seitenöffnung (64) an einer Seite des Sicherungselements (6) öffnet.

12. Plattenheizkörper (1) nach Anspruch 10 oder 11, wobei
die Vielzahl von Pfaden (30) einen ersten Pfad (30) an dem einen Ende in der spezifischen Richtung (D1) und einen zweiten Pfad (30) neben dem ersten Pfad (30) enthalten und
die eine Stirnfläche und die andere Stirnfläche zwischen dem ersten Pfad (30) und dem zweiten Pfad (30) in der spezifischen Richtung (D1) liegen.

## Revendications

1. Procédé de fabrication d'un panneau-radiateur (1) dans lequel un élément de support (6) comprenant une ouverture d'entrée (61a) pour un liquide et une ouverture latérale (64) communiquant avec l'ouverture d'entrée (61a) est disposé dans une position correspondant à une entrée (21a) pour un liquide prévu dans un élément de panneau (2A, 2B), **caractérisé en ce que** le procédé comprend les étapes consistant à :
insérer une partie de guidage (81) s'étendant vers une position prédéterminée (P) dans l'ouverture latérale (64) de l'élément de support (6) ;
placer l'élément de support (6) dans la position prédéterminée (P) avec l'ouverture latérale (64) tournée dans une direction prédéterminée en déplaçant l'élément de support (6) dans la position prédéterminée (P) le long de la partie de guidage (81) tandis que la partie de guidage (81) est insérée dans l'ouverture latérale (64) ; et
fixer l'élément de support (6) disposé dans la position prédéterminée (P) à l'élément de panneau (2A, 2B) dans une position correspondant à l'entrée (21a) de l'élément de panneau (2A, 2B).

2. Procédé de fabrication d'un panneau-radiateur (1) selon la revendication 1, dans lequel l'élément de support (6) comprend :
une première partie de disque (61) formée avec l'ouverture d'entrée (61a),
une seconde partie de disque (62) en regard de la première partie de disque (61) avec un espace dans le sens de l'épaisseur de la première partie de disque (61) ; et
une partie de paroi latérale (63) ayant une surface d'extrémité disposée à une extrémité dans une direction circonférentielle et une autre surface d'extrémité disposée à une autre extrémité dans la direction circonférentielle, s'étendant dans la direction circonférentielle entre la première partie de disque (61) et la seconde partie de disque (62) pour raccorder la première partie de disque (61) à la seconde partie de disque, l'ouverture latérale (64) a une profondeur définie par la première surface d'extrémité et la une autre surface d'extrémité, et,
à l'étape de mise en place, l'élément de support (6) est déplacé dans la position prédéterminée (P) le long de la partie de guidage (81) avec la première surface d'extrémité et la une autre surface d'extrémité qui sont en contact avec la partie de guidage (81).

3. Procédé de fabrication d'un panneau-radiateur (1) selon la revendication 2, dans lequel la première surface d'extrémité et la une autre surface d'extrémité s'étendent en parallèle avec la partie de guidage (81).

4. Procédé de fabrication d'un panneau-radiateur (1) selon la revendication 2 ou 3, dans lequel l'ouverture latérale (64) a une largeur d'ouverture définie par une partie d'une surface interne de la première partie de disque (61) et une partie d'une surface interne de la seconde partie de disque (62) opposée à la partie de la surface interne de la première partie de disque (61), et,
à l'étape de mise en place, l'élément de support (6) est déplacé dans la position prédéterminée (P) le long de la partie de guidage (81) avec la partie de la surface interne de la première partie de disque (61) et la partie de la surface interne de la seconde partie de disque (62) qui sont en regard de la partie de guidage (81).

5. Procédé de fabrication d'un panneau-radiateur (1) selon l'une quelconque des revendications 2 à 4, dans lequel :
la première partie de disque (61) a une surface externe sur son côté externe dans le sens de l'épaisseur,
la seconde partie de disque (62) a une surface externe sur son côté externe dans le sens de l'épaisseur et,
à l'étape de mise en place, l'élément de support (6) est déplacé dans la position prédéterminée (P) le long de la partie de guidage (81) avec la surface externe de la première partie de disque (611) ou la surface externe de la seconde partie de disque (621) qui est en contact avec une surface de guidage (82) s'étendant vers la position prédéterminée (P).

6. Procédé de fabrication d'un panneau-radiateur (1) selon l'une quelconque des revendications 2 à 5, dans lequel :
la partie de paroi latérale (63) a une surface circonférentielle externe et,
à l'étape de mise en place, l'élément de support (6) est déplacé dans la position prédéterminée (P) le long de la partie de guidage (81) avec la surface circonférentielle externe de la partie de paroi latérale (63) en regard d'une surface latérale de guidage (83) s'étendant vers la position prédéterminée (P).

7. Elément de support destiné à être disposé dans une position correspondant à une entrée (21a) pour un liquide formée dans un panneau-radiateur (1), comprenant une ouverture d'entrée (61a) pour permettre au liquide de s'écouler à travers l'entrée (21a) et une ouverture latérale (64) communiquant avec l'ouverture d'entrée (61a),
dans lequel l'élément de support (6) comprend :
une première partie de disque (61) pourvue de l'ouverture d'entrée (61a) ;
une seconde partie de disque (62) en regard de la première partie de disque (61) avec un espace dans le sens de l'épaisseur de la première partie de disque (61) ; et
une partie de paroi latérale (63) ayant une surface d'extrémité disposée à une extrémité dans la direction circonférentielle et une autre surface d'extrémité disposée à une autre extrémité dans la direction circonférentielle, s'étendant dans la direction circonférentielle entre la première partie de disque (61) et la seconde partie de disque (62) pour raccorder la première partie de disque (61) et la seconde partie de disque (62), dans lequel :
l'ouverture latérale (64) a une largeur d'ouverture définie par une partie d'une surface interne de la première partie de disque (612) et une partie d'une surface interne de la seconde partie de disque (622) ainsi qu'une profondeur définie par la première surface d'extrémité et la une autre surface d'extrémité et
l'ouverture latérale (64) a une première longueur définie par un bord externe de la première surface d'extrémité et un bord externe de la une autre surface d'extrémité et une seconde longueur définie par un bord interne de la première surface d'extrémité et un bord externe de la une autre surface d'extrémité, **caractérisé en ce que** la première longueur est supérieure à la seconde longueur.

8. Elément de support selon la revendication 7, dans lequel :
chacune de la première surface d'extrémité et de la une autre surface d'extrémité s'étend en parallèle avec une direction longitudinale de l'ouverture latérale (64).

9. Panneau-radiateur (1) comprenant :
un premier collecteur (21) s'étendant dans une direction spécifique (D1) et comportant l'entrée (21a) pour un liquide ;
un second collecteur (22) s'étendant dans la direction spécifique (D1) et comportant une sortie (22a) pour le liquide ;
une partie de division d'écoulement (23) comprenant une pluralité de trajets (30) s'étendant du premier collecteur (21) au second collecteur (22) et alignés dans la direction spécifique (D1) ; et
un élément de support (6) selon la revendication 7 ou 8 disposé dans le premier collecteur (21) pour permettre au liquide qui a été introduit à travers l'entrée (21a) de s'écouler vers l'intérieur du premier collecteur (21) à travers l'ouverture latérale (64).

10. Panneau-radiateur (1) selon la revendication 9, dans lequel :
l'entrée (21a) est formée à une extrémité du premier collecteur (21) dans la direction spécifique (D1),
la sortie (22a) est formée à une extrémité du second collecteur (22) dans la direction spécifique (D1) qui se situe du même côté de l'entrée (21a) et
l'ouverture latérale (64) s'ouvre à l'autre extrémité dans la direction spécifique (D1) dans le premier collecteur (21).

11. Panneau-radiateur (1) selon la revendication 10, dans lequel seule l'ouverture latérale (64) s'ouvre sur un côté de l'élément de support (6).

12. Panneau-radiateur (1) selon la revendication 10 ou 11, dans lequel :
la pluralité de trajets (30) comprend un premier trajet (30) à la première extrémité dans la direction spécifique (D1) et un second trajet (30) adjacent au premier trajet (30) et
la première surface d'extrémité et la une autre surface d'extrémité sont situées entre le premier trajet (30) et le second trajet (30) dans la direction spécifique (D1).
